(19) Europäisches Patentamt
European Patent Office
Office européen des brevets

(11) **EP 3 019 374 B1**

(12) **FASCICULE DE BREVET EUROPEEN**

(45) Date de publication et mention de la délivrance du brevet:
**06.09.2017 Bulletin 2017/36**

(21) Numéro de dépôt: **14742274.5**

(22) Date de dépôt: **25.06.2014**

(51) Int Cl.:
***B60W 20/00*** (2016.01)     ***B60K 6/48*** (2007.10)
***B60K 6/52*** (2007.10)     ***B60W 30/18*** (2012.01)

(86) Numéro de dépôt international:
**PCT/FR2014/051590**

(87) Numéro de publication internationale:
**WO 2015/004361 (15.01.2015 Gazette 2015/02)**

(54) **COMMANDE DU COUPLE TRANSMIS A UNE ROUE MOTRICE D'UN VEHICULE A MOTORISATION HYBRIDE**

STEUERUNG DES AUF DAS ANTRIEBSRAD EINES HYBRIDKRAFTFAHRZEUGS ÜBERTRAGENEN DREHMOMENTS

CONTROL OF TORQUE TRANSMITTED TO THE DRIVING WHEEL OF A HYBRID MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.07.2013 FR 1356859**

(43) Date de publication de la demande:
**18.05.2016 Bulletin 2016/20**

(73) Titulaire: **Renault S.A.S.**
**92100 Boulogne-Billancourt (FR)**

(72) Inventeurs:
• **DEBERT, Maxime**
  **F-78000 Versailles (FR)**
• **SUARD, Céline**
  **F-91290 La Norville (FR)**
• **MOITY, Laurent**
  **F-91340 Ollainville (FR)**

(56) Documents cités:
**DE-A1-102010 029 386     DE-A1-102010 052 964**
**FR-A1- 2 954 441**

## Description

## Domaine technique de l'invention

L'invention concerne un procédé de commande d'un couple mécanique transmis à au moins une roue motrice d'un véhicule automobile à motorisation hybride par un groupe motopropulseur comprenant au moins une machine thermique, au moins une machine électrique et un dispositif de liaison permettant un accouplement et un désaccouplement d'au moins la machine électrique à ladite au moins une roue motrice, procédé dans lequel la course d'une pédale d'accélération du véhicule est scindée au niveau d'une position de point neutre variable en une première course de régulation de freinage et une deuxième course de régulation d'accélération.

L'invention a pour objet également un système de commande et un véhicule automobile à motorisation hybride.

## État de la technique

Un véhicule automobile à motorisation hybride comprend au moins une machine électrique et au moins une machine thermique. Ces deux machines peuvent entraîner les mêmes roues motrices ou des roues motrices différentes. Dans un mode de fonctionnement hybride, les machines électrique et thermique transmettent simultanément un couple mécanique à au moins une roue motrice, qu'il s'agisse d'un couple positif moteur ou d'un couple négatif résistif.

L'invention concerne la catégorie de ces véhicules à motorisation hybride capables de fonctionner également selon un mode purement thermique où seule la machine thermique transmet un couple mécanique aux roues motrices. Parmi les véhicules automobiles visés par l'invention, il existe une catégorie dite bi-mode capable également de fonctionner selon un mode de motorisation purement électrique où la machine thermique ne transmet pas de couple mécanique aux roues motrices.

A cet effet, il est connu que le groupe motopropulseur puisse comprendre un dispositif de liaison permettant sélectivement d'accoupler ou de désaccoupler les machines électrique et thermique aux roues motrices. Autrement dit, le dispositif de liaison permet d'accoupler ou de désaccoupler la machine thermique à au moins une roue motrice et permet d'accoupler ou de désaccoupler la machine électrique à au moins une roue motrice, identique ou non. Dans le mode purement thermique/électrique, seul le moteur thermique/électrique participe à la traction tandis que dans le mode hybride, les machines électrique et thermique peuvent participer à la traction. On parle aussi de crabotage et de décrabotage lorsque l'on accouple un organe moteur à la roue.

Mais l'invention vise aussi les véhicules automobiles ne pouvant pas fonctionner selon un tel mode purement électrique et capable de ne fonctionner que selon le mode purement thermique et le mode hybride.

Dans ce cas de figure, le dispositif de liaison permet uniquement d'accoupler ou de désaccoupler la machine électrique.

Dans l'état de la technique, il est aussi connu, quand on dispose d'une machine électrique travaillant en moteur pour l'entraînement du véhicule en mode de motorisation purement électrique ou en mode de motorisation hybride, de faire fonctionner cette machine électrique selon un principe de freinage dit récupératif, c'est-à-dire à récupération d'énergie. D'un point de vue électrique, la machine électrique travaille alors en générateur et convertit l'énergie mécanique appliquée sur son rotor en un courant électrique qui peut alors être régulé dans un contrôleur de machine électrique comme un courant de charge d'une batterie par exemple destinée à alimenter la machine électrique. Dans ce mode de freinage récupératif, la consommation d'énergie mécanique produite par la conversion électrique applique un couple de freinage aux roues du véhicule. Il en résulte d'une part que le véhicule peut être au moins partiellement freiné à l'aide de la machine électrique fonctionnant en génératrice et d'autre part que l'énergie cinétique récupérée par le freinage peut être stockée sous forme électrochimique dans un accumulateur ou batterie, cette énergie étant réutilisable par la suite pour la propulsion du véhicule ou pour des fonctions accessoires.

Il est connu que ce freinage récupératif peut être commandé lors des phases de freinage proprement dites, c'est-à-dire lorsque le conducteur appuie sur la pédale de frein du véhicule. L'invention ne concerne pas ce domaine de commande.

Mais le freinage récupératif est développé de manière préférentielle pour être commandé et mis en oeuvre durant des phases de décélérations sans freinage, c'est-à-dire lorsque le conducteur relâche sa pression sur la pédale d'accélérateur, sans actionner la pédale de frein, la pédale ayant tendance à se relever. L'invention concerne ce domaine de commande de couple mécanique. Il est connu de prévoir que la course de la pédale d'accélération soit décomposée au niveau d'un point neutre, pour lequel le couple transmis aux roues par le groupe motopropulseur est nul, en une première course de régulation de freinage et une deuxième course de régulation d'accélération. Au-delà du point neutre, le groupe motopropulseur transmet aux roues motrices un couple moteur. En deçà du point neutre, le groupe motopropulseur transmet un couple résistif sur les roues motrices.

Ce couple résistif peut être intégralement (au rendement près) converti en énergie électrique dans le cas d'un mode de fonctionnement purement électrique. Dans le cas du mode de fonctionnement à motorisation hybride, ce couple résistif peut se partager en un couple engendré par le frein moteur de la machine thermique et en un couple de freinage récupératif par la machine électrique qui convertit l'énergie cinétique de son rotor en électricité.

Le document FR-A1-2749229 au nom de la Demanderesse prévoit que le couple de freinage récupératif sur la machine électrique est une fonction de la vitesse du relevé de pied de la pédale d'accélérateur.

Le document FR-A1-2945243 également au nom de la Demanderesse prévoit que l'amplitude de la course de régulation de freinage par la pédale d'accélérateur dépend de la charge de la batterie.

Ces solutions connues donnent satisfaction dans le cas des véhicules automobiles hybrides non sujets à un accouplement et à un désaccouplement des machines électrique et thermique. Mais ces documents ne prennent pas en compte une telle éventualité de crabotage et de décrabotage et ces solutions ne peuvent pas être utilisées dans de tels cas.

En effet, il en résulterait une problématique du confort ressenti car lors d'un relevé de pied de la pédale d'accélérateur par le conducteur, le véhicule freinerait trop brutalement lors d'un crabotage : lors des phases de crabotage et de décrabotage, le passage du fonctionnement récupératif au fonctionnement non récupératif et réciproquement est perturbant pour les passagers en raison d'une sensation de freinage brusque.

D'autre part, dans le cas particulier envisagé par l'invention d'un véhicule bi-mode (capable de fonctionner non seulement en mode hybride mais également en mode purement électrique), le ressenti des passagers lors des phases de décélération n'est pas identique dans le mode purement électrique et dans le mode hybride, notamment lors des changements de modes durant le roulage du véhicule.

**Objet de l'invention**

Le but de la présente invention est de proposer une solution de commande d'un couple mécanique transmis à au moins une roue motrice d'un véhicule automobile à motorisation hybride qui remédie aux inconvénients listés ci-dessus.

Notamment, un objet de l'invention est de fournir une telle solution de commande, dans le cas d'un groupe motopropulseur assurant un accouplement et un désaccouplement d'au moins la machine électrique aux roues motrices afin de pouvoir varier entre un mode purement thermique et un mode hybride, qui présente les points suivants :

- la fourniture d'une progressivité du couple résistif dans les zones approchant les phases d'accouplement et de désaccouplement, durant le passage du mode hybride au mode purement thermique,
- dans le cas particulier envisagé par l'invention d'un véhicule bi-mode (capable de fonctionner non seulement en mode hybride mais également en mode purement électrique), la fourniture d'une sensation de décélération qui soit identique dans le mode hybride et dans le mode purement électrique, afin d'améliorer le confort des passagers, notamment lors des transitions de modes en cours de roulage,

- une maximisation de la quantité d'énergie récupérée en mode hybride et éventuellement en mode purement électrique,
- un couple de freinage récupératif par la machine électrique qui soit dosable par le conducteur.

Ces objets peuvent être atteints par l'intermédiaire d'un procédé de commande d'un couple mécanique transmis à au moins une roue motrice d'un véhicule automobile à motorisation hybride par un groupe motopropulseur comprenant au moins une machine thermique, au moins une machine électrique et un dispositif de liaison permettant un accouplement et un désaccouplement d'au moins la machine électrique à ladite au moins une roue motrice, procédé dans lequel la course d'une pédale d'accélération du véhicule est scindée au niveau d'une position de point neutre variable en une première course de régulation de freinage et une deuxième course de régulation d'accélération, tel qu'au sein de la première course de régulation de freinage où la machine électrique fonctionne en générateur, une consigne de couple de freinage récupératif par la machine électrique est déterminée à partir de l'enfoncement de la pédale d'accélérateur par le conducteur et à partir d'une valeur de couple maximal de récupération d'énergie établie à partir d'une première fonction enregistrée dans une mémoire et donnant la valeur de couple maximal de récupération en fonction de la vitesse du véhicule, la première fonction prenant une valeur sensiblement nulle pour une vitesse supérieure limite du véhicule correspondant à la vitesse du véhicule au moment de l'accouplement et du désaccouplement de la machine électrique par le dispositif de liaison.

La consigne de couple de freinage récupératif est préférentiellement une fonction linéaire de l'enfoncement de la pédale d'accélérateur par le conducteur.

Il peut être prévu que sur une plage de vitesse du véhicule comprise entre une première vitesse inférieure limite du véhicule et la vitesse supérieure limite du véhicule, la première fonction présente une première partie partant de la première vitesse inférieure limite du véhicule et où la valeur absolue de la valeur de couple maximal de récupération croît continûment avec la vitesse du véhicule et une deuxième partie se terminant par la vitesse supérieure limite et où la valeur absolue de la valeur de couple maximal de récupération décroit continûment avec la vitesse du véhicule. Préférentiellement, la valeur de couple maximal de récupération donnée par la première fonction pour la première vitesse inférieure limite du véhicule est sensiblement nulle.

Le procédé peut comprendre une étape de détermination de la vitesse du véhicule, une étape de détermination de l'enfoncement de la pédale d'accélérateur, une étape de définition de la position de point neutre de la pédale d'accélérateur en fonction de la vitesse du véhicule déterminée à l'étape de détermination, la consigne de couple de freinage récupératif dépendant de la position de point neutre définie à l'étape de définition.

Préférentiellement, la position du point neutre de la pédale d'accélérateur est définie à partir d'une deuxième fonction enregistrée dans une mémoire et donnant la position du point neutre de la pédale d'accélérateur en fonction de la vitesse du véhicule, la deuxième fonction prenant une valeur sensiblement nulle pour la vitesse supérieure limite du véhicule qui correspond à la vitesse du véhicule au moment de l'accouplement et du désaccouplement de la machine électrique par le dispositif de liaison.

Il peut être fait en sorte qu'au sein de la deuxième course de régulation d'accélération, la consigne de couple moteur à transmettre par le groupe motopropulseur est établie à partir d'une troisième fonction enregistrée dans une mémoire et donnant la valeur de la consigne de couple moteur en fonction de la vitesse du véhicule, en fonction de l'enfoncement de la pédale d'accélérateur par le conducteur et de la position de point neutre de la pédale d'accélérateur.

Un système de commande d'un couple mécanique transmis à au moins une roue motrice d'un véhicule à motorisation hybride par un groupe motopropulseur du véhicule pourra comprendre au moins une machine thermique et au moins une machine électrique et un dispositif de liaison permettant un accouplement et un désaccouplement d'au moins la machine électrique à ladite au moins une roue motrice, le système comprenant une pédale d'accélérateur reliée à une unité de contrôle électronique et l'unité de contrôle électronique étant configurée pour imposer, en fonction de l'enfoncement de la pédale d'accélérateur, un couple moteur ou un couple résistif à la roue motrice transmis par le groupe motopropulseur, l'unité de contrôle électronique comprenant des éléments matériels et/ou logiciels qui mettent en oeuvre le procédé de commande.

Un véhicule automobile à motorisation hybride, peut comprendre un groupe motopropulseur du véhicule comprenant au moins une machine thermique et au moins une machine électrique et un dispositif de liaison permettant un accouplement et un désaccouplement d'au moins la machine électrique à ladite au moins une roue motrice, et un tel système de commande.

## Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :

- la figure 1 représente un exemple de première fonction F1 donnant la valeur de couple maximal de récupération noté « $C_{recup\ max}$ » en fonction de la vitesse du véhicule notée « V »,
- la figure 2 représente un exemple de deuxième fonction F2 donnant, en fonction de la vitesse positive du véhicule V (roulage en marche avant), le pourcentage d'enfoncement de la pédale d'accélérateur correspondant à la position de point neutre, noté « x »,
- la figure 3 représente un exemple de troisième fonction F3 donnant le couple moteur positif noté « $C_{mot}$ » en fonction de la variable « z » représentant le pourcentage d'enfoncement de la pédale d'accélérateur et de la vitesse positive du véhicule V,
- et la figure 4 représente enfin un exemple de deuxième fonction F2 donnant, en fonction de la vitesse négative du véhicule V (roulage marche arrière), le pourcentage d'enfoncement de la pédale d'accélérateur correspondant à la position de point neutre, toujours noté « x ».

## Description de modes préférentiels de l'invention

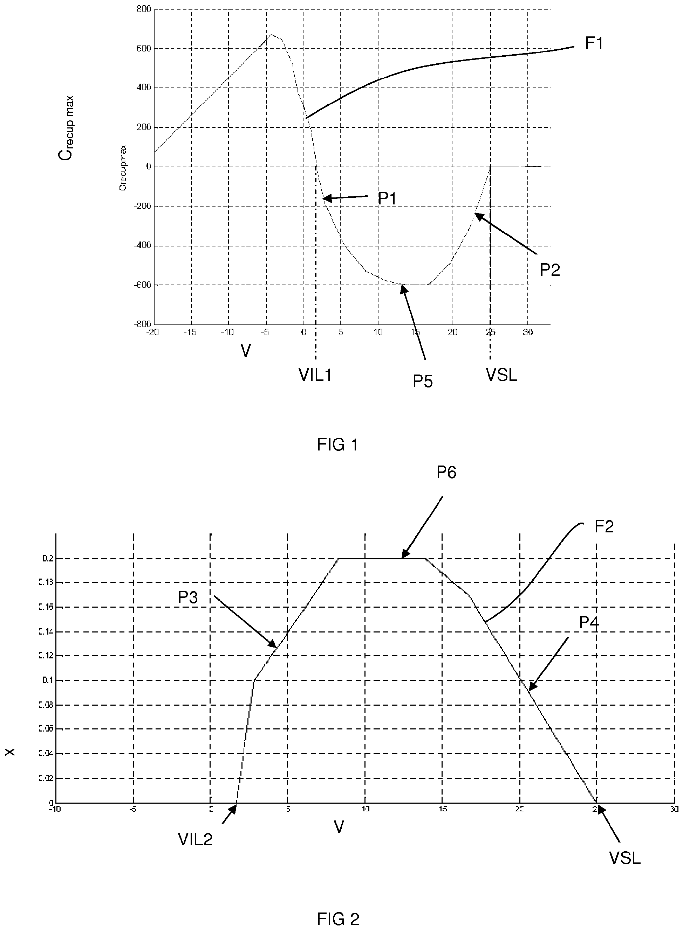

L'invention décrite plus loin en référence aux figures 1 à 4 concerne un procédé et un système de commande du couple mécanique transmis à au moins une roue motrice d'un véhicule automobile à motorisation hybride. Ce couple mécanique est transmis par un groupe motopropulseur qui comprend au moins une machine thermique et au moins une machine électrique et un dispositif de liaison permettant un accouplement ou crabotage, et un désaccouplement ou décrabotage, d'au moins la machine électrique à ladite au moins une roue motrice. Egalement, le dispositif de liaison peut permettre éventuellement d'accoupler ou de désaccoupler la machine thermique à au moins une roue motrice, indépendamment ou non par rapport à l'accouplement et le désaccouplement de la machine électrique, à au moins une roue motrice, identique ou non.

Préférentiellement, le véhicule comporte deux roues avant et deux roues arrière, et dispose d'une machine thermique liée au train avant, ainsi que deux machines électriques reliées chacune à l'une des roues arrières du véhicule.

Le procédé et le système selon l'invention prévoient que la course totale de déplacement d'une pédale d'accélération du véhicule, manipulée par le pied du conducteur, est scindée au niveau d'une position de point neutre variable en une première course de régulation de freinage et une deuxième course de régulation d'accélération. Avantageusement, la position de point neutre de la pédale d'accélérateur évolue au sein de la course de pédale en fonction de la vitesse réelle du véhicule, qui sera repérée « V » dans la suite. Le principe appliqué par le procédé et le système est qu'au-delà du point neutre, le groupe motopropulseur transmet aux roues motrices un couple moteur supérieur à 0 tandis qu'en deçà du point neutre, le groupe motopropulseur transmet un couple résistif inférieur à 0 sur les roues motrices. Il est donc compris que le point neutre est défini comme le point de la course de la pédale d'accélérateur pour lequel le groupe motopropulseur transmet aux roues motrices un couple nul.

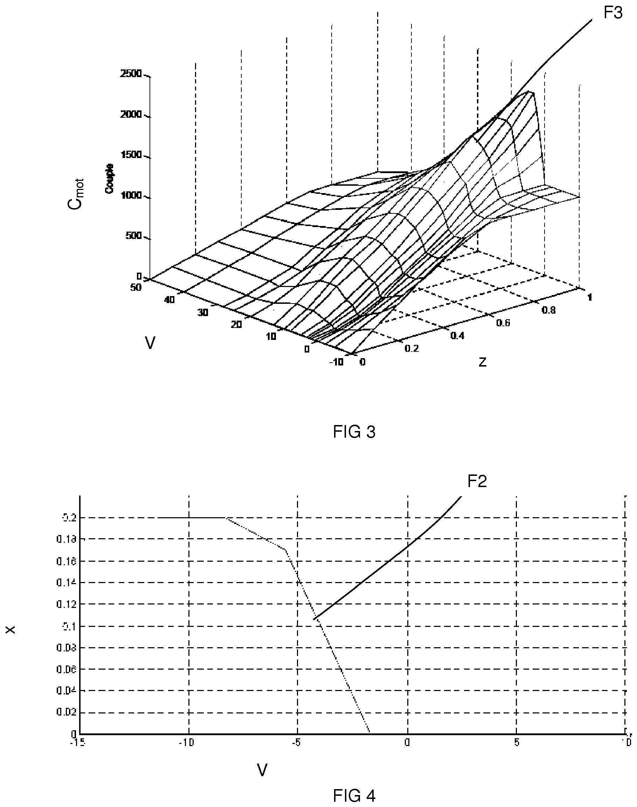

Dans la suite de la description, le pourcentage réel de l'enfoncement de la pédale d'accélérateur induite par la pression du pied du conducteur est repéré « y ». Le pourcentage d'enfoncement de la pédale d'accélérateur correspondant à sa position de point neutre est repéré « x », ce pourcentage x évoluant en fonction de la vitesse V (voir les fonctions F2 des figures 2 et 4). Lorsque y est supérieur à x et que le conducteur souhaite accélérer en se plaçant dans la deuxième course de régulation d'accélération, la consigne de couple moteur de valeur positive à transmettre aux roues motrices par le groupe motopropulseur est noté « $C_{mot}$ », déterminé grâce à la fonction F3 de la figure 3. Lorsque par contre y est inférieur à x et que le conducteur souhaite décélérer en se plaçant dans la première course de régulation de freinage, la consigne de couple résistif et récupératif de valeur négative à transmettre aux roues motrices par le groupe motopropulseur est noté « $C_{recup}$ ».

Au sein de la première course de régulation de freinage où la machine électrique fonctionne en générateur, la consigne de couple de freinage récupératif $C_{recup}$ par la machine électrique est déterminée à partir de l'enfoncement y de la pédale d'accélérateur par le conducteur et à partir d'une valeur de couple maximal de récupération d'énergie notée « $C_{recup\ max}$ » (figure 1, exprimée en N.m) établie à partir d'une première fonction F1 enregistrée dans une mémoire et donnant la valeur de couple maximal de récupération $C_{recup\ max}$ en fonction de la vitesse V du véhicule. De manière essentielle, la première fonction F1 prend une valeur sensiblement nulle pour une vitesse supérieure limite notée « VSL » du véhicule qui correspond à la vitesse V prise par le véhicule au moment de l'accouplement et du désaccouplement de ladite au moins une machine électrique à ladite au moins une roue motrice par le dispositif de liaison.

La figure 1 représente un exemple d'une telle première fonction F1 donnant la valeur de couple maximal de récupération noté « $C_{recup\ max}$ » en fonction de la vitesse du véhicule notée « V ». La valeur de VSL est sensiblement égale à 25 m.s$^{-1}$ ce qui correspond à une vitesse envisagée pour le véhicule lors du crabotage et du décrabotage de l'ordre de 90 km.h$^{-1}$.

Dans un mode particulièrement avantageux, sur une plage de vitesse du véhicule comprise entre une première vitesse inférieure limite du véhicule, repérée « VIL1 » sur la figure 1, et la vitesse supérieure limite du véhicule repérée « VSL », la première fonction F1 présente :

- une première partie P1 qui part de la première vitesse inférieure limite du véhicule VIL1 et le long de laquelle la valeur absolue de la valeur de couple maximal de récupération $C_{recup\ max}$ croît continûment en même temps la vitesse V du véhicule,

- une deuxième partie P2 qui se termine par la vitesse supérieure limite VSL et le long de laquelle la valeur absolue de la valeur de couple maximal de récupération $C_{recup\ max}$ décroit continûment en même temps la vitesse du véhicule.

- une éventuelle partie P5 raccordant les première et deuxième parties P1 et P2, cette partie P5 étant constitutive d'une zone sommitale (en valeur absolue) et maximale des valeurs susceptibles d'être prises par $C_{recup\ max}$ dans la plage de vitesse comprise entre VIL1 et VSL.

Sur la figure 1, la première vitesse inférieure limite VIL1 est environ 2 m.s$^{-1}$. La zone sommitale correspondant à la partie P5 est atteinte entre 13 et 17 m. s$^{-1}$ environ. La première partie P1 qui correspond à la partie de la première fonction F1 correspondant à la plage de vitesse comprise entre VIL1 et le début de la partie P5, soit entre environ 2 et 13 m.s$^{-1}$, prévoit une augmentation continument croissante de la valeur absolue $C_{recup\ max}$ en même temps que V, pour passer de 0 à environ 600. La deuxième partie P2 qui correspond à la partie de la première fonction F1 correspondant à la plage de vitesse comprise entre la fin de la partie P5 et VSL, soit entre environ 17 et 25 m.s$^{-1}$, prévoit une diminution continument décroissante de la valeur absolue de $C_{recup\ max}$ en même temps que V, pour passer de 600 à environ 0. Entre VIL1 et VSL, la valeur prise par $C_{recup\ max}$ est négative, de sorte qu'il s'agit d'une forme en cloche inversée. Autrement dit, dans cet exemple préférentiel, la valeur de couple maximal de récupération $C_{recup\ max}$ donnée par la première fonction F1 pour la première vitesse inférieure limite VIL1 du véhicule est sensiblement nulle.

Dans la plage de vitesse V comprise entre environ -4m.s$^{-1}$ (ce qui correspond à une vitesse en marche arrière de 4 m.s$^{-1}$) et VIL1, $C_{recup\ max}$ décroît continûment en même temps que la vitesse V, pour passer d'une valeur maximale positive d'environ 650 à 0. Dans le domaine des vitesses V inférieures à -4 m.s$^{-1}$, $C_{recup\ max}$ croit continûment en même temps que la vitesse V, pour passer d'une valeur de l'ordre de 80 pour une vitesse de -20 m.s$^{-1}$ à la valeur maximale positive d'environ 650 pour la vitesse de -4 m.s$^{-1}$. Dans le domaine des vitesses V inférieures à VIL1, la valeur prise par $C_{recup\ max}$ est positive.

Il ressort de ce qui précède, par le fait de l'existence d'une telle partie P2 à décroissance continue de la valeur absolue de $C_{recup\ max}$ et par le fait que $C_{recup\ max}$ est sensiblement nulle lorsque la vitesse V du véhicule est celle prévue pour la mise en oeuvre du désaccouplement et de l'accouplement de la machines électrique aux roues motrices, que la transition entre le mode hybride et le mode purement thermique est la plus transparente et douce possible pour le conducteur. En effet, le couple récupératif prévu au moment de la transition entre ces deux modes est alors sensiblement nul, ce qui correspond au comportement du véhicule en mode purement thermique. D'autre part, la décroissance de la valeur absolue de $C_{recup\ max}$ le long de la partie P2 permet au conducteur de pouvoir doser facilement le niveau de récupération d'énergie par la machine électrique du groupe motopropulseur. Par ailleurs, par le fait de l'existence d'une telle partie P1 à croissance continue de la valeur absolue de $C_{recup\ max}$ en même temps que la vitesse V et par le fait que $C_{recup\ max}$ est sensiblement nulle lorsque la vitesse V du véhicule est environ 2 m.s⁻¹, il est possible de mettre en oeuvre une transition entre le mode thermique et un éventuel mode purement électrique (dans lequel la machine thermique ne transmet aucun couple aux roues motrices) qui soit la plus transparente et douce possible pour le conducteur. Toutes ces dispositions permettent d'améliorer le confort et l'agrément, tout en maximisant la quantité d'énergie récupérée par la machine électrique dans les modes hybride et purement électrique.

Préférentiellement, la consigne de couple de freinage récupératif $C_{recup}$ est une fonction linéaire de l'enfoncement y de la pédale d'accélérateur par le conducteur, qu'elle soit proportionnelle ou non.

Ainsi, le procédé comprend avantageusement une étape de détermination de la vitesse V du véhicule, une étape de détermination de l'enfoncement y de la pédale d'accélérateur, une étape de définition de la position de point neutre de la pédale d'accélérateur en fonction de la vitesse V du véhicule déterminée à l'étape de détermination, la consigne de couple de freinage récupératif $C_{recup}$ dépendant de la position de point neutre définie à l'étape de définition. Par exemple, la détermination périodique ou continue de y et de V peut être réalisée par mesure.

Préférentiellement, la consigne de couple de freinage récupératif $C_{recup}$ est déterminée à partir de la formule (1) suivante :

$$C_{recup} = \max\left(\left(1 - \frac{y}{x}\right), 0\right) \times C_{recup\ max} \quad (1)$$

Où $C_{recup}$ est la consigne de couple de freinage récupératif, y est le pourcentage d'enfoncement de la pédale d'accélérateur par le conducteur, x est le pourcentage d'enfoncement de la pédale d'accélérateur correspondant à sa position de point neutre, $C_{recup\ max}$ est la valeur de couple maximal de récupération.

Selon la formule (1), la valeur de $C_{recup}$ est nulle si y est supérieur à x. Ainsi, si la pédale d'accélérateur est appuyée au-delà du point neutre (qui lui-même varie en fonction de la vitesse V), $C_{recup}$ est nulle et au contraire il sera recherché à transmettre un couple moteur positif par le groupe motopropulseur. Au contraire, la valeur de $C_{recup}$ est égale, si y est inférieur à x, au produit entre $C_{recup\ max}$ précédemment obtenu à l'aide de la fonction F1 (en fonction de V déterminé par exemple par mesure) et le facteur correspondant à la différence entre 1 et le quotient entre y et x. Ainsi, si la pédale d'accélérateur est appuyée en-deçà du point neutre (qui lui-même varie en fonction de la vitesse V), $C_{recup}$ de valeur négative est calculé par la formule (1).

Préférentiellement, la position du point neutre de la pédale d'accélérateur, qui se définit notamment par la valeur x du pourcentage d'enfoncement de la pédale d'accélérateur correspondant à sa position de point neutre, est définie à partir d'une deuxième fonction F2 enregistrée dans une mémoire et donnant la position du point neutre de la pédale d'accélérateur, c'est-à-dire la valeur x, en fonction de la vitesse V du véhicule.

La figure 2 représente un exemple d'une telle deuxième fonction F2 donnant, en fonction de la vitesse positive du véhicule V (dans le cas d'un roulage en marche avant), le pourcentage d'enfoncement de la pédale d'accélérateur correspondant à la position de point neutre, noté « x ». Elle illustre que de manière préférentielle, la deuxième fonction F2 prend une valeur sensiblement nulle lorsque V est égale à la vitesse supérieure limite VSL (qui correspond à la vitesse du véhicule au moment de l'accouplement et du désaccouplement de la machine électrique par le dispositif de liaison). Elle illustre également que de manière préférentielle, sur la plage de vitesse du véhicule comprise entre une deuxième vitesse inférieure limite du véhicule, notée « VIL2 », et la vitesse supérieure limite VSL du véhicule, la deuxième fonction F2 présente :

- une première partie P3 qui part de la deuxième vitesse inférieure limite VIL2 du véhicule et le long de laquelle la valeur du pourcentage d'enfoncement de la pédale d'accélérateur correspondant à sa position de point neutre, c'est-à-dire la valeur de x, croît continûment en même temps que la vitesse du véhicule,
- une deuxième partie P4 qui se termine par la vitesse supérieure limite VSL et le long de laquelle la valeur du pourcentage d'enfoncement de la pédale d'accélérateur correspondant à sa position de point neutre, c'est-à-dire la valeur de x, décroit continûment en même temps que la vitesse du véhicule,
- une éventuelle partie P6 raccordant les première et deuxième parties P3 et P4, cette partie P6 étant constitutive d'une zone sommitale et maximale des valeurs susceptibles d'être prises par x dans la plage de vitesse comprise entre VIL2 et VSL.

Avantageusement, la première vitesse inférieure limite VIL1 de la figure 1 est sensiblement égale à la deuxième vitesse inférieure limite VIL2 de la figure 2.

Sur la figure 2, la deuxième vitesse inférieure limite VIL2 est environ 2 m.s⁻¹. La zone sommitale correspondant à la partie P6 est atteinte entre 8 et 14 m.s⁻¹ environ pour atteindre la valeur maximale de 20% environ. La première partie P3 qui correspond à la partie de la deuxième fonction F2 correspondant à la plage de vitesse comprise entre VIL2 et le début de la partie P6, soit entre environ 2 et 8 m.s⁻¹, prévoit une augmentation continument croissante du pourcentage x en même temps que V, pour passer de 0% à environ 20%. La deuxième partie P4 qui correspond à la partie de la deuxième fonction F2 correspondant à la plage de vitesse comprise entre la fin de la partie P6 et VSL, soit entre environ 14 et 25 m.s⁻¹, prévoit une diminution continument décroissante du pourcentage x en même temps que V, pour passer de 20% environ à 0%.

Autrement dit, dans cet exemple préférentiel, la valeur du pourcentage d'enfoncement de la pédale d'accélérateur correspondant à sa position de point neutre, c'est-à-dire la valeur de x, donnée par la deuxième fonction F2 lorsque la vitesse V est égale à la deuxième vitesse inférieure limite VIL2, est sensiblement nulle.

La décroissance de x prévue le long de la partie P4 permet, en s'approchant de la vitesse du véhicule prévue pour la mise en oeuvre du désaccouplement et de l'accouplement de la machines électrique aux roues motrices, que la transition entre le mode hybride et le mode purement thermique soit la plus transparente et douce possible pour le conducteur. Cela permet concrètement de se rapprocher d'un comportement normal d'un véhicule purement thermique pour lequel la valeur classique de x est toujours égale à 0%. En effet, dans un mode purement thermique, la pédale d'accélérateur sert uniquement sur toute sa course totale à réguler l'accélération, une position correspondant à un pourcentage x égal à 0% servant au frein moteur procuré par le moteur thermique uniquement. La progressivité de la valeur de x entre VIL2 et VSL, donc de la position neutre de la pédale d'accélérateur, permet au conducteur de ne pas être surpris par un freinage trop brusque et d'avoir le temps de doser sa décélération, la pente le long de la partie P4 étant préférentiellement calculée de sorte que le conducteur puisse ressentir la décélération et agir sur celle-ci. C'est aussi une raison pour laquelle x est sensiblement égal à 0% lorsque V est égale à VSL.

La figure 4 représente un exemple d'une telle deuxième fonction F2 donnant le pourcentage d'enfoncement de la pédale d'accélérateur correspondant à la position de point neutre, c'est-à-dire la valeur de x, en fonction de la vitesse négative du véhicule V, dans les conditions de roulage en marche arrière (pour des vitesses V inférieures à 0). Elle est continument décroissante entre -8 m.s⁻¹ et -2 m.s⁻¹ environ, afin de passer de 20% à 0% environ. La valeur de x est nulle entre -2 m.s⁻¹ et 0 m.s⁻¹. Par contre, la valeur de x est maintenue sensiblement constante, par exemple sensiblement égale à 20%, pour des vitesses V inférieures à -8 m.s⁻¹. Ces valeurs de x en conditions de marche arrière du véhicule peuvent être introduites dans la formule (1) afin de savoir gérer la récupération d'énergie dans de telles conditions. La première fonction F1 peut également être utilisée, de la même manière que dans les conditions de roulage en marche avant.

Il a été décrit précédemment la stratégie de commande du couple résistif de valeur négative à transmettre aux roues motrices par le groupe motopropulseur, lorsque la pédale d'accélérateur est positionnée dans la première course de régulation de freinage, c'est-à-dire lorsque y est inférieur à x. Dans la suite, il est décrit une stratégie de commande du couple moteur de valeur positive à transmettre aux roues motrices par le groupe motopropulseur, lorsque la pédale d'accélérateur est positionnée dans la deuxième course de régulation d'accélération, c'est-à-dire lorsque y est supérieur à x.

De manière générale, il est prévu qu'au sein de la deuxième course de régulation d'accélération, la consigne de couple moteur $C_{mot}$ à transmettre par le groupe motopropulseur soit établie à partir d'une troisième fonction F3 enregistrée dans une mémoire et donnant la valeur de la consigne de couple moteur $C_{mot}$ en fonction de la vitesse V du véhicule, en fonction de l'enfoncement y de la pédale d'accélérateur par le conducteur et en fonction de la position de point neutre de la pédale d'accélérateur, c'est-à-dire en fonction de x.

Préférentiellement, la troisième fonction F3 prend en entrée la vitesse V du véhicule et une variable d'entrée notée « z » établie à partir de l'enfoncement y de la pédale d'accélérateur par le conducteur et à partir de la position de point neutre de la pédale d'accélérateur, c'est-à-dire à partir de x, selon la formule (2) suivante :

$$z = \frac{y - x}{1 - x} \quad (2)$$

Où z est ladite variable d'entrée, y est le pourcentage d'enfoncement de la pédale d'accélérateur par le conducteur, x est le pourcentage d'enfoncement de la pédale d'accélérateur correspondant à sa position de point neutre.

La figure 3 représente un exemple d'une telle troisième fonction F3 donnant le couple moteur positif $C_{mot}$ en fonction de la variable z construite à l'aide de la formule (2) et de la vitesse positive du véhicule V déterminée par exemple par mesure périodique ou continue.

Ainsi, pour une position neutre de la pédale correspondant à un pourcentage d'enfoncement x égal à 0%, il est retrouvé un comportement classique d'un véhicule purement thermique, c'est-à-dire dépourvu de machine électrique pour l'entraînement ou le freinage. La variable z ainsi construite sert à l'établissement de $c_{mot}$ en fonction de la vitesse du véhicule selon la troisième fonction F3 qui peut avantageusement être la cartographie classique de la commande de couple moteur pour un véhicule à traction uniquement thermique, c'est-à-dire un véhicule qui n'est pas hybride.

Ainsi, un fonctionnement de la stratégie de commande peut être le suivant :

Les trois fonctions F1, F2 et F3 sont préétablies et enregistrées dans une ou plusieurs mémoires. Puis, en cours d'utilisation du véhicule, la vitesse V et l'enfoncement y de la pédale sont déterminés périodiquement ou en continue. A partir de la valeur de V, il est d'abord établi la valeur de x à l'aide de la deuxième fonction F2 dont un exemple est illustré sur les figures 2 et 4, suivant les conditions de roulage en marche avant ou en marche arrière.

Puis, si y est supérieur à x, alors il est prévu d'utiliser la première fonction F1 dont un exemple est illustré sur la figure 1 : la détermination de V permet d'établir la valeur de couple maximale de récupération $C_{recup\,max}$ admissible à cette vitesse. Puis, en connaissant également y qui a été préalablement déterminé et x qui été préalablement établi, la formule (1) permet de déterminer la consigne de couple de freinage récupératif par la machine électrique $C_{recup}$ de valeur négative, ce qui correspond bien à un enfoncement y de la pédale d'accélérateur en-deçà de la position de point neutre x.

Par contre, si x est supérieur à y, alors il est prévu d'utiliser la troisième fonction F3 dont un exemple est illustré sur la figure 3. Préalablement, la variable z est calculée à l'aide de la formule (2), à partir de la connaissance de x et de y. Cette troisième fonction permet de connaitre la consigne de couple moteur $C_{mot}$, de valeur positive, ce qui correspond bien à un enfoncement y de la pédale d'accélérateur au-delà de la position de point neutre x.

Le système de commande comprend une pédale d'accélérateur reliée à une unité de contrôle électronique et l'unité de contrôle électronique est configurée pour imposer à ladite au moins une roue motrice, en fonction de l'enfoncement y de la pédale d'accélérateur, un couple moteur correspondant à la consigne $C_{mot}$ précédemment décrite ou un couple résistif correspondant à la consigne $C_{recup}$ précédemment décrite, transmis par le groupe motopropulseur. L'unité de contrôle électronique comprend des éléments matériels et/ou logiciels qui mettent en oeuvre le procédé de commande détaillé précédemment.

Enfin, l'invention concerne aussi un véhicule automobile à motorisation hybride, comprenant d'une part un groupe motopropulseur du véhicule comprenant au moins une machine thermique et au moins une machine électrique et un dispositif de liaison permettant un accouplement et un désaccouplement d'au moins la machine électrique à ladite au moins une roue motrice, et d'autre part le système de commande évoqué au paragraphe précédent.

L'invention porte aussi sur un support d'enregistrement de données lisible par un calculateur, sur lequel est enregistré un programme informatique comprenant des moyens de codes de programme informatique de mise en oeuvre du procédé.

Il est rappelé que le domaine d'application de la stratégie de commande selon l'invention est limité aux véhicules automobiles appartenant à la catégorie des véhicules à motorisation hybride capables de fonctionner également selon un mode purement thermique où seule la machine thermique transmet un couple mécanique aux roues motrices. Il peut s'agir indifféremment de véhicules automobiles dits bi-modes capables également de fonctionner selon un mode de motorisation purement électrique où seule la machine électrique transmet un couple mécanique aux roues motrices, ou bien de véhicules automobiles ne pouvant pas fonctionner selon un tel mode purement électrique et capable de ne fonctionner que selon le mode purement thermique et le mode hybride.

## Revendications

1. Procédé de commande d'un couple mécanique transmis à au moins une roue motrice d'un véhicule automobile à motorisation hybride par un groupe motopropulseur comprenant au moins une machine thermique, au moins une machine électrique et un dispositif de liaison permettant un accouplement et un désaccouplement d'au moins la machine électrique à ladite au moins une roue motrice, procédé dans lequel la course d'une pédale d'accélération du véhicule est scindée au niveau d'une position de point neutre variable en une première course de régulation de freinage et une deuxième course de régulation d'accélération, **caractérisé en ce qu'**au sein de la première course de régulation de freinage où la machine électrique fonctionne en générateur, une consigne de couple de freinage récupératif ($C_{recup}$) par la machine électrique est déterminée à partir de l'enfoncement (y) de la pédale d'accélérateur par le conducteur et à partir d'une valeur de couple maximal de récupération d'énergie ($C_{recup\,max}$) établie à partir d'une première fonction (F1) enregistrée dans une mémoire et donnant la valeur de couple maximal de récupération ($C_{recup\,max}$) en fonction de la vitesse (V) du véhicule, la première fonction (F1) prenant une valeur sensiblement nulle pour une vitesse supérieure limite (VSL) du véhicule correspondant à la vitesse (V) du véhicule au moment de l'accouplement et du désaccouplement de la machine électrique par le dispositif de liaison.

2. Procédé de commande selon la revendication 1, **caractérisé en ce que** la consigne de couple de freinage récupératif ($C_{recup}$) est une fonction linéaire de l'enfoncement (y) de la pédale d'accélérateur par le conducteur.

3. Procédé de commande selon l'une des revendications 1 ou 2, **caractérisé en ce que** sur une plage de vitesse (V) du véhicule comprise entre une première vitesse inférieure limite (VIL1) du véhicule et la vitesse supérieure limite (VSL) du véhicule, la première fonction (F1) présente une première partie (P1) partant de la première vitesse inférieure limite (VIL1) du véhicule et où la valeur absolue de la valeur de couple maximal de récupération ($C_{recup\,max}$) croît continûment avec la vitesse (V) du véhicule et une deuxième partie (P2) se terminant par la vitesse supérieure limite (VSL) et où la valeur absolue de la valeur de couple maximal de récupération ($C_{recup\,max}$) décroit continûment avec la vitesse (V) du véhicule.

**4.** Procédé de commande selon la revendication 3, **caractérisé en ce que** la valeur de couple maximal de récupération ($C_{recup\,max}$) donnée par la première fonction (F1) pour la première vitesse inférieure limite (VIL1) du véhicule est sensiblement nulle.

**5.** Procédé de commande selon l'une des revendications 1 à 4, **caractérisé en ce qu'**il comprend une étape de détermination de la vitesse (V) du véhicule, une étape de détermination de l'enfoncement (y) de la pédale d'accélérateur, une étape de définition de la position (x) de point neutre de la pédale d'accélérateur en fonction de la vitesse (V) du véhicule déterminée à l'étape de détermination, la consigne de couple de freinage récupératif ($C_{recup}$) dépendant de la position (x) de point neutre définie à l'étape de définition.

**6.** Procédé de commande selon la revendication 5, **caractérisé en ce que** la position (x) du point neutre de la pédale d'accélérateur est définie à partir d'une deuxième fonction (F2) enregistrée dans une mémoire et donnant la position (x) du point neutre de la pédale d'accélérateur en fonction de la vitesse (V) du véhicule, la deuxième fonction (F2) prenant une valeur sensiblement nulle pour la vitesse supérieure limite (VSL) du véhicule qui correspond à la vitesse (V) du véhicule au moment de l'accouplement et du désaccouplement de la machine électrique par le dispositif de liaison.

**7.** Procédé de commande selon l'une des revendications 1 à 6, **caractérisé en ce qu'**au sein de la deuxième course de régulation d'accélération, la consigne de couple moteur ($C_{mot}$) à transmettre par le groupe motopropulseur est établie à partir d'une troisième fonction (F3) enregistrée dans une mémoire et donnant la valeur de la consigne de couple moteur ($C_{mot}$) en fonction de la vitesse (V) du véhicule, en fonction de l'enfoncement (y) de la pédale d'accélérateur par le conducteur et de la position (x) de point neutre de la pédale d'accélérateur.

**8.** Système de commande d'un couple mécanique transmis à au moins une roue motrice d'un véhicule à motorisation hybride par un groupe motopropulseur du véhicule comprenant au moins une machine thermique et au moins une machine électrique et un dispositif de liaison permettant un accouplement et un désaccouplement d'au moins la machine électrique à ladite au moins une roue motrice, le système comprenant une pédale d'accélérateur reliée à une unité de contrôle électronique et l'unité de contrôle électronique étant configurée pour imposer, en fonction de l'enfoncement de la pédale d'accélérateur, un couple moteur ou un couple résistif à la roue motrice transmis par le groupe motopropulseur, **caractérisé en ce que** l'unité de contrôle électronique comprend des éléments matériels et/ou logiciels qui mettent en oeuvre le procédé de commande selon l'une des revendications 1 à 7.

**9.** Véhicule automobile à motorisation hybride, comprenant un groupe motopropulseur du véhicule comprenant au moins une machine thermique et au moins une machine électrique et un dispositif de liaison permettant un accouplement et un désaccouplement d'au moins la machine électrique à ladite au moins une roue motrice, **caractérisé en ce qu'**il comprend un système de commande selon la revendication 8.

**10.** Support d'enregistrement de données lisible par un calculateur, sur lequel est enregistré un programme informatique comprenant des moyens de codes de programme informatique de mise en oeuvre du procédé selon l'une des revendications 1 à 7.

**Patentansprüche**

**1.** Verfahren zur Steuerung eines mechanischen Drehmoments, das auf mindestens ein Antriebsrad eines Hybridkraftfahrzeugs durch ein Antriebssystem übertragen wird, umfassend mindestens eine Wärmekraftmaschine, mindestens eine elektrische Maschine und eine Verbindungsvorrichtung, die eine Kopplung und eine Entkopplung mindestens der elektrischen Maschine mit dem mindestens einen Antriebsrad ermöglicht, wobei bei dem Verfahren der Weg eines Gaspedals des Fahrzeugs im Bereich einer variablen Nullpunktposition in einen ersten Bremsregulierungsweg und einen zweiten Beschleunigungsregulierungsweg geteilt ist, **dadurch gekennzeichnet, dass** innerhalb des ersten Bremsregulierungsweges, wo die elektrische Maschine als Generator funktioniert, ein rekuperativer Bremsmomentsollwert ($C_{recup}$) durch die elektrische Maschine auf Basis des Niederdrückens (y) des Gaspedals durch den Fahrer und auf Basis eines Werts eines maximalen Energierückführungsmoments ($C_{recup\,max}$) bestimmt wird, der auf Basis einer ersten Funktion (F1) erstellt wird, die in einem Speicher registriert ist und den Wert eines maximalen Rückführungsmoments ($C_{recup\,max}$) in Abhängigkeit von der Geschwindigkeit (V) des Fahrzeugs angibt, wobei die erste Funktion (F1) einen Wert im Wesentlichen gleich null für eine obere Grenzgeschwindigkeit (VSL) des Fahrzeugs entsprechend der Geschwindigkeit (V) des Fahrzeugs zum Zeitpunkt der Kopplung und der Entkopplung der elektrischen Maschine durch die Verbindungsvorrichtung annimmt.

**2.** Steuerungsverfahren nach Anspruch 1, **dadurch gekennzeichnet, dass** der rekuperative Bremsmomentsollwert ($C_{recup}$) eine lineare Funktion des Niederdrückens (y) des Gaspedals durch den Fahrer ist.

3. Steuerungsverfahren nach einem der Ansprüche 1 oder 2, **dadurch gekennzeichnet, dass** in einem Geschwindigkeitsbereich (V) des Fahrzeugs zwischen einer ersten unteren Grenzgeschwindigkeit (VIL1) des Fahrzeugs und der oberen Grenzgeschwindigkeit (VSL) des Fahrzeugs die erste Funktion (F1) einen ersten Teil (P1), der von der ersten unteren Grenzgeschwindigkeit (VIL1) des Fahrzeugs ausgeht und bei dem der Absolutwert des Werts eines maximalen Rückführungsmoments ($C_{recup\ max}$) kontinuierlich mit der Geschwindigkeit (V) des Fahrzeugs zunimmt, und einen zweiten Teil (P2) aufweist, der mit der oberen Grenzgeschwindigkeit (VSL) endet und bei dem der Absolutwert des Werts eines maximalen Rückführungsmoments ($C_{recup\ max}$) kontinuierlich mit der Geschwindigkeit (V) des Fahrzeugs abnimmt.

4. Steuerungsverfahren nach Anspruch 3, **dadurch gekennzeichnet, dass** der Wert eines maximalen Rückführungsmoments ($C_{recup\ max}$), der durch die erste Funktion (F1) für die untere Grenzgeschwindigkeit (VIL1) des Fahrzeugs angegeben ist, im Wesentlichen gleich null ist.

5. Steuerungsverfahren nach einem der Ansprüche 1 bis 4, **dadurch gekennzeichnet, dass** es einen Schritt der Bestimmung der Geschwindigkeit (V) des Fahrzeugs, einen Schritt der Bestimmung des Niederdrückens (y) des Gaspedals, einen Schritt der Definition der Position (x) des Nullpunktes des Gaspedals in Abhängigkeit von der Geschwindigkeit (V) des Fahrzeugs, die in dem Bestimmungsschritt bestimmt wurde, umfasst, wobei der rekuperative Drehmomentsollwert ($C_{recup}$) von der Position (x) des Nullpunktes, die in dem Definitionsschritt definiert wurde, abhängt.

6. Steuerungsverfahren nach Anspruch 5, **dadurch gekennzeichnet, dass** die Position (x) des Nullpunktes des Gaspedals auf Basis einer zweiten Funktion (F2) definiert wird, die in einem Speicher registriert ist und die Position (x) des Nullpunktes des Gaspedals in Abhängigkeit von der Geschwindigkeit (V) des Fahrzeugs angibt, wobei die zweite Funktion (F2) einen Wert im Wesentlichen gleich null für die obere Grenzgeschwindigkeit (VSL) des Fahrzeugs annimmt, die der Geschwindigkeit (V) des Fahrzeugs zum Zeitpunkt der Kopplung und der Entkopplung der elektrischen Maschine durch die Verbindungsvorrichtung entspricht.

7. Steuerungsverfahren nach einem der Ansprüche 1 bis 6, **dadurch gekennzeichnet, dass** innerhalb des zweiten Beschleunigungsregulierungsweges der von dem Antriebssystem zu übertragende An-

triebsmomentsollwert ($C_{mot}$) auf Basis einer dritten Funktion (F3) erstellt wird, die in einem Speicher registriert ist und den Wert des Antriebsmomentsollwerts ($C_{mot}$) in Abhängigkeit von der Geschwindigkeit (V) des Fahrzeugs, in Abhängigkeit vom Niederdrücken (y) des Gaspedals durch den Fahrer und der Position (x) des Nullpunktes des Gaspedals angibt.

8. System zur Steuerung eines mechanischen Drehmoments, das auf mindestens ein Antriebsrad eines Hybridkraftfahrzeugs durch ein Antriebssystem des Fahrzeugs übertragen wird, umfassend mindestens eine Wärmekraftmaschine und mindestens eine elektrische Maschine und eine Verbindungsvorrichtung, die eine Kopplung und eine Entkopplung mindestens der elektrischen Maschine mit dem mindestens einen Antriebsrad ermöglicht, wobei das System ein Gaspedal umfasst, das mit einer elektronischen Kontrolleinheit verbunden ist, und die elektronische Kontrolleinheit dazu vorgesehen ist, in Abhängigkeit vom Niederdrücken des Gaspedals dem Antriebsrad ein Antriebsmoment oder ein Widerstandsmoment, das von dem Antriebssystem übertragen wird, vorzugeben, **dadurch gekennzeichnet, dass** die elektronische Kontrolleinheit Hardware- und/oder Software-Elemente umfasst, die das Steuerungsverfahren nach einem der Ansprüche 1 bis 7 einsetzen.

9. Hybridkraftfahrzeug, umfassend ein Antriebssystem des Fahrzeugs, umfassend mindestens eine Wärmekraftmaschine und mindestens eine elektrische Maschine und eine Verbindungsvorrichtung, die eine Kopplung und eine Entkopplung mindestens der elektrischen Maschine mit dem mindestens einen Antriebsrad ermöglicht, **dadurch gekennzeichnet, dass** es ein Steuerungssystem nach Anspruch 8 umfasst.

10. Von einem Rechner lesbarer Datenaufzeichnungsträger, auf dem ein Informatikprogramm registriert ist, umfassend Informatikprogrammcodemittel für den Einsatz des Verfahrens nach einem der Ansprüche 1 bis 7.

**Claims**

1. Method for controlling a mechanical torque transmitted to at least one driving wheel of a hybrid motor vehicle by a powertrain comprising at least one heat engine, at least one electric motor, and a connection device allowing a coupling and a decoupling of at least the electric motor to said at least one driving wheel, in which method the stroke of an acceleration pedal of the vehicle is divided at a variable neutral point position into a first braking-adjustment stroke and a second acceleration-adjustment stroke, **characterized in that** within the first braking-adjustment stroke, in which the electric motor operates as a generator, a regenerative braking torque setpoint ($C_{recup}$) for the electric motor is determined on the basis of the depression (y) of the accelerator pedal by the driver and on the basis of a value of maximum energy recovery torque ($C_{recup\ max}$) established on the basis of a first function (F1) stored in a memory and providing the value of maximum recovery torque ($C_{recup\ max}$) depending on the speed (V) of the vehicle, the first function (F1) assuming a value of substantially zero for an upper limit speed (VSL) of the vehicle corresponding to the speed (V) of the vehicle at the moment of coupling and decoupling of the electric motor by the connection device.

2. Control method according to Claim 1, **characterized in that** the regenerative braking torque setpoint ($C_{recup}$) is a linear function of the depression (y) of the accelerator pedal by the driver.

3. Control method according to either of Claims 1 or 2, **characterized in that**, over a speed (V) range of the vehicle comprised between a first lower limit speed (VIL1) of the vehicle and the upper limit speed (VSL) of the vehicle, the first function (F1) has a first part (P1) starting from the first lower limit speed (VIL1) of the vehicle and at which the absolute value of the value of maximum recovery torque ($C_{recup\ max}$) rises continuously with the speed (V) of the vehicle and a second part (P2) terminating at the upper limit speed (VSL) and at which the absolute value of the value of maximum recovery torque ($C_{recup\ max}$) decreases continuously with the speed (V) of the vehicle.

4. Control method according to Claim 3, **characterized in that** the value of maximum recovery torque ($C_{recup\ max}$) provided by the first function (F1) for the first lower limit speed (VIL1) of the vehicle is substantially zero.

5. Control method according to any one of Claims 1 to 4, **characterized in that** it comprises a step of determining the speed (V) of the vehicle, a step of determining the depression (y) of the accelerator pedal, a step of defining the neutral point position (x) of the accelerator pedal depending on the speed (V) of the vehicle determined in the determining step, the regenerative braking torque setpoint ($C_{recup}$) being dependent on the neutral point position (x) defined in the defining step.

6. Control method according to Claim 5, **characterized in that** the position (x) of the neutral point of the accelerator pedal is defined on the basis of a second function (F2) stored in a memory and providing the position (x) of the neutral point of the accelerator pedal depending on the speed (V) of the vehicle, the second function (F2) assuming a value of substantially zero for the upper limit speed (VSL) of the vehicle, which corresponds to the speed (V) of the vehicle at the moment of coupling and decoupling of the electric motor by the connection device.

7. Control method according to any one of Claims 1 to 6, **characterized in that**, within the second acceleration-adjustment stroke, the engine torque setpoint ($C_{mot}$) to be transmitted by the powertrain is established on the basis of a third function (F3) stored in a memory and providing the value of the engine torque setpoint ($C_{mot}$) on the basis of the speed (V) of the vehicle, on the basis of the depression (y) of the accelerator pedal by the driver, and on the basis of the neutral point position (x) of the accelerator pedal.

8. System for controlling a mechanical torque transmitted to at least one driving wheel of a hybrid motor vehicle by a powertrain of the vehicle comprising at least one heat engine and at least one electric motor and a connection device enabling a coupling and a decoupling of at least the electric motor to said at least one driving wheel, the system comprising an accelerator pedal connected to an electronic control unit, and the electronic control unit being configured to apply to the driving wheel, depending on the depression of the accelerator pedal, an engine torque or a resistive torque transmitted by the powertrain, **characterized in that** the electronic control unit comprises hardware and/or software elements which carry out the control method according to any one of Claims 1 to 7.

9. Hybrid motor vehicle, comprising a powertrain of the vehicle comprising at least one heat engine and at least one electric motor and a connection device enabling a coupling and a decoupling of at least the electric motor to said at least one driving wheel, **characterized in that** said vehicle comprises a control system according to Claim 8.

10. Data recording medium that can be read by a computer, on which a computer program is stored comprising computer program code means for carrying out the method according to any one of Claims 1 to 7.

FIG 1

FIG 2

FIG 3

FIG 4

**EP 3 019 374 B1**

## RÉFÉRENCES CITÉES DANS LA DESCRIPTION

**Documents brevets cités dans la description**

- FR 2749229 A1

- FR 2945243 A1